# EUROPEAN PATENT APPLICATION

(11) **EP 4 675 263 A1**
(43) Date of publication of application: **07.01.2026**
(21) Application number: 23925377.6
(22) Date of filing: 13.11.2023
(51) Int. Cl.: G01N 23/04, G01N 23/18, G06T 3/00, G06T 3/4038, G06T 7/00

(54) **DISPLAY CONTROL DEVICE, DISPLAY CONTROL METHOD, AND DISPLAY CONTROL PROGRAM**

(30) Priority: 28.02.2023 JP 2023030565
(71) Applicant: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2023/040819
(87) International publication number: WO 2024/180824

(57) **Abstract**

A display control device accepts selection of at least one image from among a plurality of images stored in a storage device, and if a group of images of the same individual including the selected at least one image exists in the storage device, the group of images of the same individual having been obtained by imaging a plurality of at least partially non-overlapping portions of the same individual, carries out control to display a composite image based on the group of images of the same individual.

## Description

### BACKGROUND OF THE INVENTION

### 1. Field of the Invention

The present disclosure relates to a display control device, a display control method, and a display control program.

### 2. Description of the Related Art

JP2010-203808A discloses a non-destructive inspection system that synthesizes an image of an entire object under inspection by combining partial images of the object under inspection that have been picked up by a radiation detector. The non-destructive inspection system synthesizes the image of the entire object under inspection by superimposing adjacent partial images of the object under inspection such that there are no overlapping regions. The process of compositing multiple images to generate a single large image in this way is referred to as mosaicing.

### SUMMARY OF THE INVENTION

In processes for the manufacture of industrial products, an inspection using captured images of an object (hereinafter referred to as "image inspection") may be performed. For example, non-destructive inspection is performed to determine whether defects are present or absent in the interior of a product by using radiographic images.

In image inspection, there are cases where an object that cannot fit in a single image is imaged multiple times, such as when the object to undergo image inspection is a large-scale device. In these cases, the images taken by performing imaging multiple times are images of different portions of the object. In these cases, a single image only allows the user to check the object locally. This creates a burden of having to sequentially access a number of images equal to the number of divisions, and check the images one at a time.

Moreover, in these cases, the portion of the object shown in a single image is insufficient to allow the user to obtain information on the surrounding region, such as surrounding portions of the object or the structure of the entire object, and therefore to check the entire object, the user may need to compare multiple images to make an overall assessment, which reduces efficiency as the user checks the images.

The present disclosure has been devised in light of the above circumstances, and an objective thereof is to provide a display control device, a display control method, and a display control program capable of mitigating a reduction in efficiency as the user checks the images.

A first aspect according to the technology of the present disclosure is a display control device including at least one processor configured to accept selection of at least one image from among a plurality of images stored in a storage device, and if a group of images of the same individual including the selected at least one image exists in the storage device, the group of images of the same individual having been obtained by imaging a plurality of at least partially non-overlapping portions of the same individual, carry out control to display a composite image based on the group of images of the same individual.

A second aspect according to the technology of the present disclosure is the display control device according to the first aspect, wherein the processor is configured to carry out control to display both the selected at least one image and the composite image.

A third aspect according to the technology of the present disclosure is the display control device according to the first or second aspect, wherein the composite image is an image in which the group of images of the same individual is arranged on a basis of relative positional relationships of portions of the same individual shown in each image in the group of images of the same individual.

A fourth aspect according to the technology of the present disclosure is the display control device according to any one of the first to third aspects, wherein the same individual is an object of non-destructive inspection, and the processor is configured to acquire a result of a flaw detection process performed on each image in the group of images of the same individual, and when carrying out control to display the composite image, carry out control to display, in a distinguishable manner, the result of the flaw detection process performed on each image in the group of images of the same individual that make up the composite image.

A fifth aspect according to the technology of the present disclosure is the display control device according to the fourth aspect, wherein the processor is configured to carry out control to display, in a distinguishable manner, information representing whether a defect is present or not and at least one of a number of flaws, a density of flaws, or a severity of a flaw as the result of the flaw detection process.

A sixth aspect according to the technology of the present disclosure is the display control device according to any one of the first to fifth aspects, wherein the group of images of the same individual includes images obtained by imaging adjacent portions with overlapping partial regions, and the processor is configured to extract features of the shapes of the portions from each image in the group of images of the same individual, and generate the composite image by performing image processing to overlay shapes having the features of two images which were obtained by imaging adjacent portions and for which a similarity of the features is equal to or greater than a certain value.

A seventh aspect according to the technology of the present disclosure is the display control device according to any one of the first to sixth aspects, wherein the same individual is an object of non-destructive inspection, the group of images of the same individual includes images obtained by imaging adjacent portions with overlapping partial regions, and the processor is configured to acquire a result of a flaw detection process performed on each image in the group of images of the same individual, and generate the composite image by performing image processing to overlay flaws in two images which were obtained by imaging adjacent portions and which show the same flaw.

An eighth aspect according to the technology of the present disclosure is the display control device according to the fourth or the seventh aspect, wherein the processor is configured to perform a flaw detection process on each image in the group of images of the same individual.

A ninth aspect according to the technology of the present disclosure is the display control device according to any one of the first to eighth aspects, wherein each image in the group of images of the same individual is an image obtained by imaging in a state with a marker shown, and the processor is configured to generate the composite image by performing image processing to overlay the markers in two images obtained by imaging adjacent portions.

A 10th aspect according to the technology of the present disclosure is the display control device according to any one of the first to ninth aspects, wherein links are established for individually accessing each image in the group of images of the same individual that make up the composite image.

An 11th aspect according to the technology of the present disclosure is the display control device according to any one of the first to 10th aspects, wherein attribute information is assigned to each image in the group of images of the same individual, and the processor is configured to determine, on a basis of the attribute information, whether or not the group of images of the same individual including the selected at least one image exists in the storage device.

A 12th aspect according to the technology of the present disclosure is the display control device according to any one of the first to 11th aspects, wherein the processor is configured to, if the process for generating the composite image by compositing the group of images of the same individual fails, carry out control to display information indicating that the process for generating the composite image has failed, and accept user-designated corrections to the composite image or a user-designated instruction to retry compositing.

A 13th aspect according to the technology of the present disclosure is the display control device according to any one of the first to 12th aspects, wherein the processor is configured to perform at least one of gradation correction processing, distortion correction processing, or enlargement/reduction processing on at least one of the images that make up the composite image.

A 14th aspect according to the technology of the present disclosure is a display control method whereby a processor provided in a display control device executes a process to accept selection of at least one image from among a plurality of images stored in a storage device, and if a group of images of the same individual including the selected at least one image exists in the storage device, the group of images of the same individual having been obtained by imaging a plurality of at least partially non-overlapping portions of the same individual, carry out control to display a composite image based on the group of images of the same individual.

A 15th aspect according to the technology of the present disclosure is a display control program causing a processor provided in a display control device to execute a process to accept selection of at least one image from among a plurality of images stored in a storage device, and if a group of images of the same individual including the selected at least one image exists in the storage device, the group of images of the same individual having been obtained by imaging a plurality of at least partially non-overlapping portions of the same individual, carry out control to display a composite image based on the group of images of the same individual.

According to the present disclosure, a reduction in efficiency as the user checks the images can be mitigated.

### BRIEF DESCRIPTION OF THE DRAWINGS

Fig. 1 is a block diagram illustrating a schematic configuration of a radiographic imaging device;
Fig. 2 is a block diagram illustrating an example of a hardware configuration of a display control device;
Fig. 3 is a diagram for explaining attribute information;
Fig. 4 is a diagram for explaining a trained model;
Fig. 5 is a block diagram illustrating an example of a functional configuration of a display control device;
Fig. 6 is a diagram for explaining an image compositing process;
Fig. 7 is a diagram for explaining an image compositing process according to a modification;
Fig. 8 is a diagram for explaining an image compositing process according to a modification;
Fig. 9 is a diagram illustrating an example of a display screen;
Fig. 10 is a diagram illustrating an example of a compositing screen;
Fig. 11 is a diagram illustrating an example of a composite image;
Fig. 12 is a diagram illustrating an example of a display screen according to a modification;
Fig. 13 is a flowchart illustrating an example of a display control process;
Fig. 14 is a diagram for explaining an image compositing process using markers; and
Fig. 15 is a diagram illustrating an example of markers according to a modification.

### DESCRIPTION OF THE PREFERRED EMBODIMENTS

Hereinafter, preferred embodiments of the present disclosure will be described in detail and with reference to the attached drawings.

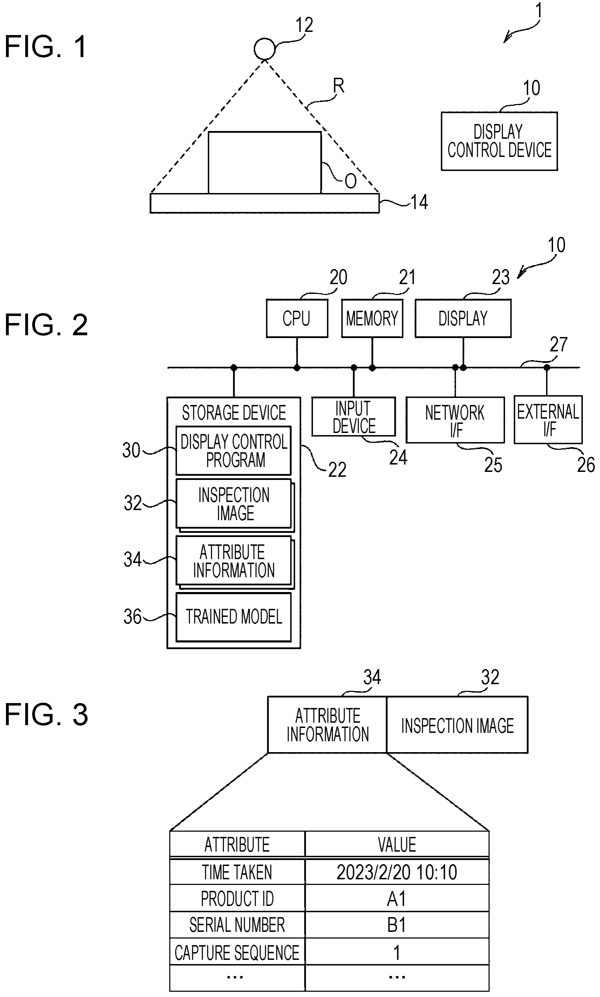

First, a configuration of a radiographic imaging device 1 according to the present embodiment will be described with reference to Fig. 1. The radiographic imaging device 1 is used in non-destructive inspection of an object under inspection. As illustrated in Fig. 1, the radiographic imaging device 1 includes a display control device 10, a radiation source 12, and a radiation detector 14. The display control device 10, the radiation source 12, and the radiation detector 14 are interconnected in a communicable state. The display control device 10 may be a personal computer or a server computer, for example.

The radiation source 12 irradiates an object O of non-destructive inspection with radiation R, such as X-rays, for example. The radiation source 12 according to the present embodiment emits cone-beam radiation R.

The radiation detector 14 includes a scintillator and a thin-film transistor (TFT) substrate as an example of a light-emitting layer that emits light when irradiated with the radiation R. The scintillator and the TFT substrate are laminated. The TFT substrate is provided with a plurality of pixels arranged in two dimensions, and each pixel is provided with a sensor unit and a field-effect thin-film transistor as an example of a conversion element in which generated electric charge increases as the emitted radiation dose increases. The sensor unit generates electric charge by absorbing light produced by the scintillator, and accumulates the generated electric charge. The field-effect thin-film transistor converts the electric charge accumulated in the sensor unit into an electrical signal and outputs the electrical signal. With the above configuration, the radiation detector 14 generates a two-dimensional radiographic image corresponding to the radiation R emitted from the radiation source 12 to irradiate the object O, and outputs the generated radiographic image to the display control device 10.

In this way, in the radiographic imaging device 1, radiographic images taken as a result of irradiating the object O with the radiation R from the radiation source 12 are saved in the display control device 10. In the following, radiographic images taken as a result of irradiating the object O with the radiation R are referred to as "inspection images".

Next, a hardware configuration of the display control device 10 according to the present embodiment will be described with reference to Fig. 2. As illustrated in Fig. 2, the display control device 10 includes a central processing unit (CPU) 20, a memory 21 that serves as a temporary storage area, and a non-volatile storage device 22. The display control device 10 also includes a display 23 such as a liquid crystal display, an input device 24 such as a keyboard and mouse, and a network interface (I/F) 25 connected to a network. The display control device 10 also includes an external I/F 26 to which the radiation source 12 and the radiation detector 14 are connected. The CPU 20, the memory 21, the storage device 22, the display 23, the input device 24, the network I/F 25, and the external I/F 26 are connected to a bus 27. The CPU 20 is an example of a processor according to the technology of the present disclosure.

The storage device 22 is achieved by a hard disk drive (HDD), a solid-state drive (SSD), flash memory, or the like. A display control program 30 is stored in the storage device 22, which serves as a storage medium. The CPU 20 reads out the display control program 30 from the storage device 22, loads the display control program 30 into the memory 21, and executes the loaded display control program 30.

A plurality of inspection images 32, a plurality of attribute information 34, and one trained model 36 are also stored in the storage device 22. In cases where, for example, the object O is a relatively small-scale device, the plurality of inspection images 32 include inspection images 32 showing the entire object O in a single image. In the example in Fig. 1, the object O is smaller than the radiation detector 14, and thus the entire object O is shown in a single inspection image 32.

In cases where, for example, the object O is a relatively large-scale device, the plurality of inspection images 32 also include a group of inspection images 32 taken by imaging the object O, which does not fit in a single image, multiple times. In such cases, the group of inspection images 32 is a group of images (hereinafter referred to as a "group of images of the same individual") obtained by imaging a plurality of at least partially non-overlapping portions of the same individual. Herein, the same individual means that the object O is the same product and the serial number is also the same, for example. In other words, in the present embodiment, objects O that are the same product but have different serial numbers are seen as separate individuals. In the present embodiment, the images in a group of images of the same individual are obtained by imaging adjacent portions with overlapping partial regions.

As illustrated in Fig. 3, each of the inspection images 32 is assigned attribute information 34, which is metadata containing a plurality of information about that particular inspection image 32. The attribute information 34 may be added as a data file external to the inspection image 32, or may be incorporated into the inspection image 32 as properties of the inspection image 32. The attribute information 34 includes attributes such as capture date and time, product identification (ID), serial number, and capture sequence.

The imaging date and time is information indicating the date and time when the inspection image 32 was captured. The product ID is information for identifying the product. The serial number is information for identifying individuals of the product. In other words, the pair of the product ID and the serial number make it possible to distinguish whether or not objects are the same individual. The capture sequence is information representing the order in which the inspection images 32 in the group of images of the same individual were captured. In the present embodiment, it is assumed that adjacent portions are imaged in consecutive order.

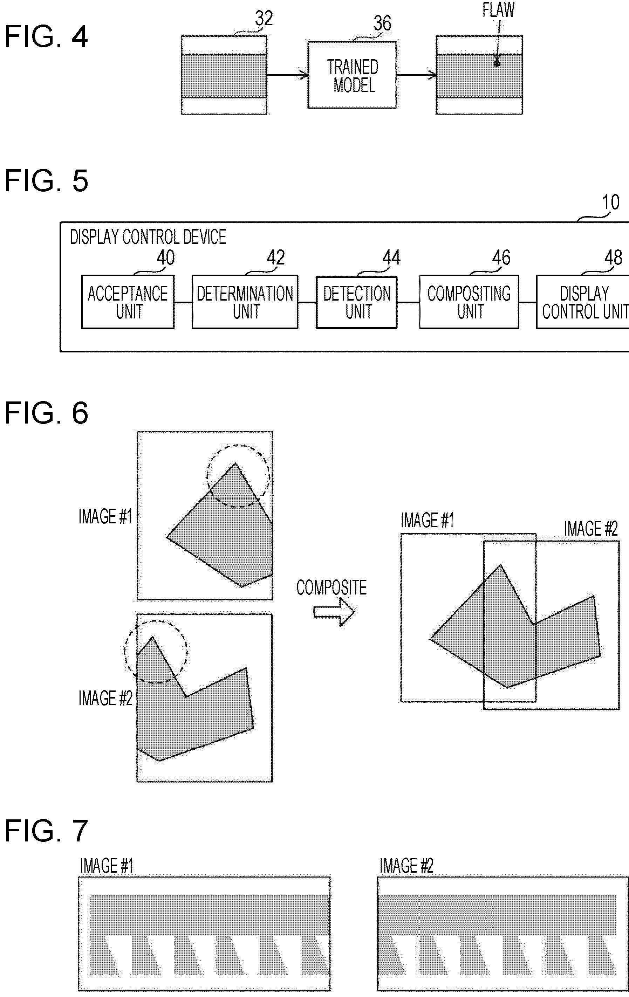

As illustrated in Fig. 4, the trained model 36 is a trained model that accepts an inspection image 32 as input, and outputs information pertaining to a flaw in the object O in the input inspection image 32. The trained model 36 is obtained in advance through machine learning using, as labeled training data, multiple sets of inspection images 32 and information pertaining to a flaw in the object O in the inspection images 32. Examples of the information pertaining to a flaw include the position of a flaw, the size of a flaw, and the shape of a flaw in an inspection image 32. In the present embodiment, the position of a flaw in an inspection image 32 is expressed as coordinates in an orthogonal coordinate system defined by the two axes of an X axis and a Y axis, with the origin is set at a specific point (for example, the point in the upper-left corner) in a two-dimensional inspection image. Note that a "flaw" in this specification is defined as a term of non-destructive inspection, and means a discontinuity such as an air bubble, foreign matter, or a crack.

Next, a functional configuration of the display control device 10 according to the present embodiment will be described with reference to Fig. 5. As illustrated in Fig. 5, the display control device 10 includes an accepting unit 40, a determination unit 42, a detection unit 44, a compositing unit 46, and a display control unit 48. The CPU 20 functions as the accepting unit 40, the determination unit 42, the detection unit 44, the compositing unit 46, and the display control unit 48 by executing the display control program 30.

The user selects a single inspection image 32 from among a plurality of inspection images 32 stored in the storage device 22. For example, the user selects a single inspection image 32 via a file manager or other file management software. The accepting unit 40 accepts the selection of a single inspection image 32 by the user.

The determination unit 42 determines, on the basis of the attribute information 34, whether or not a group of images of the same individual including the selected single inspection image 32 exists in the storage device 22. Specifically, the determination unit 42 determines whether or not a group of images of the same individual exists in the storage device 22 by determining whether or not two or more inspection images 32 having the same pair of product ID and serial number as the selected single inspection image 32 exist in the storage device 22.

Note that the determination unit 42 may additionally use the capture date and time in the determination of whether or not a group of images of the same individual exists in the storage device 22. In this case, the determination unit 42 determines whether or not two or more inspection images 32 having the same pair of product ID and serial number as the selected single inspection image 32, and for which the difference in capture date and time is within a prescribed time (for example, within 30 minutes), exist in the storage device 22. The prescribed time in this case is preset according to the time required to capture the inspection images 32.

If the determination unit 42 determines that a group of images of the same individual including the selected single inspection image 32 does not exist in the storage device 22, the detection unit 44 inputs the single inspection image 32 into the trained model 36. The trained model 36 outputs, as the result of a flaw detection process, information pertaining to a flaw in the object O in the input inspection image 32. With this arrangement, the detection unit 44 performs a flaw detection process on the single inspection image 32.

If the determination unit 42 determines that a group of images of the same individual including the selected single inspection image 32 exists in the storage device 22, the detection unit 44 inputs each image in the group of images of the same individual into the trained model 36. The trained model 36 outputs, as the result of a flaw detection process, information pertaining to a flaw in the object O in each input inspection image 32. With this arrangement, the detection unit 44 performs a flaw detection process on each image in the group of images of the same individual.

Note that the detection unit 44 may also detect a flaw in an object O in an inspection image 32 according to a known detection algorithm. A flaw in an object O in an inspection image 32 may also be specified by the user via the input device 24. In this case, the detection unit 44 detects the flaw specified by the user. Note that the flaw detection process may also be executed by a separate device other than the display control device 10. In this case, the detection unit 44 acquires the result of the flaw detection process from the separate device.

If the determination unit 42 determines that a group of images of the same individual including the selected single inspection image 32 exists in the storage device 22, the compositing unit 46 generates a single image (hereinafter referred to as a "composite image") by compositing the images in the group of images of the same individual.

Specifically, the compositing unit 46 extracts, from each image in the group of images of the same individual, features of the shape of the portion shown in the image. A known shape detection algorithm can be applied for this extraction process.

As illustrated by way of example in Fig. 6, the compositing unit 46 generates a composite image by performing image processing to overlay shapes having the features of two inspection images 32 which were obtained by imaging adjacent portions and for which the similarity of extracted features is equal to or greater than a certain value. In the example in Fig. 6, the portion enclosed by the dashed circle indicates a shape portion for which the similarity of features is equal to or greater than a certain value. This process of generating a composite image may involve translation, rotation, and the like of the inspection images 32.

As described above, since adjacent portions are imaged in consecutive order, the compositing unit 46 can refer to the capture sequence attribute in the attribute information 34 to ascertain that two inspection images 32 were obtained by imaging adjacent portions. If the group of images of the same individual includes three or more inspection images 32, the compositing unit 46 generates a single composite image by repeatedly executing the compositing of two inspection images described above while using a different pair of images each time. In other words, the composite image is an image in which the group of images of the same individual is arranged on the basis of the relative positional relationships of the portions of the same individual shown in each image in the group of images of the same individual.

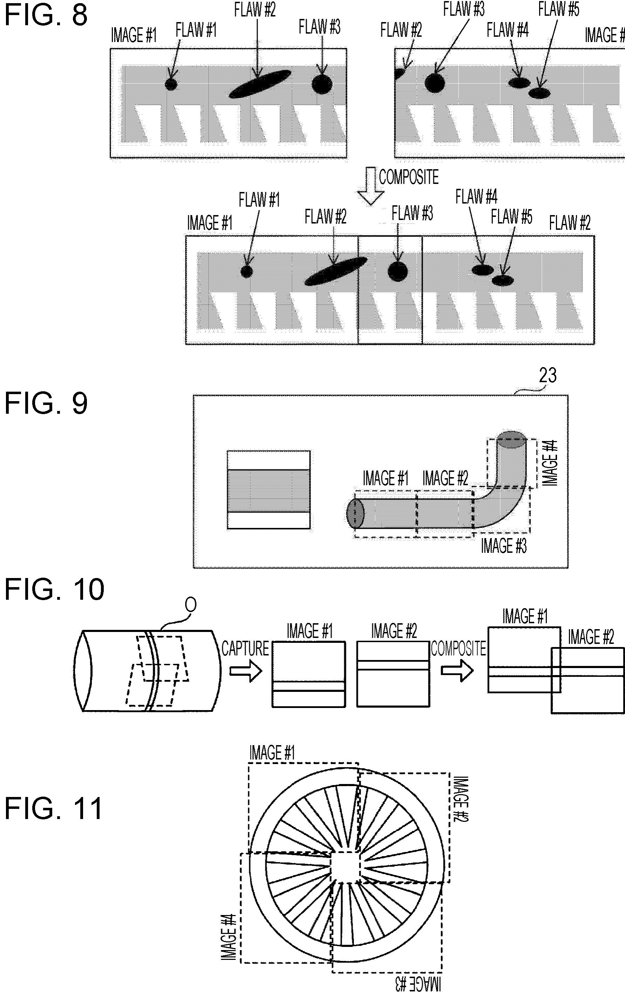

Note that, as illustrated in Fig. 7, if the object O is an object shaped such that the same shape is repeated, compositing two inspection images 32 according the process described above may be difficult in some cases. Accordingly, as illustrated in Fig. 8 for example, the compositing unit 46 may also generate a composite image by performing image processing to overlay flaws in two images which were obtained by imaging adjacent portions and which show the same flaw detected by the detection unit 44.

If the determination unit 42 determines that a group of images of the same individual including the selected single inspection image 32 exists in the storage device 22, the display control unit 48 carries out control to display the composite image generated by the compositing unit 46 on the display 23. As illustrated by way of example in Fig. 9, in the present embodiment, the display control unit 48 in this case carries out control to display both the selected single inspection image 32 and the composite image generated by the compositing unit 46 on the display 23. Fig. 9 illustrates an example in which "Image #2" is selected. Note that the display control unit 48 may also cause the selected single inspection image 32 to be distinguishable in the composite image, such as by highlighting a border around the portion corresponding to the selected single inspection image 32 in the composite image.

As illustrated in Fig. 10, the composite image may also be a composition of a plurality of inspection images 32 obtained by imaging the lateral surface of a cylindrical pipe in a circling manner. As illustrated in Fig. 11, the composite image may also be a composition of a plurality of inspection images 32 obtained by imaging the object O while rotating the object O along the directions of the detection plane of the radiation detector 14 while keeping the center fixed in place. Fig. 11 illustrates an example of a composite image obtained by compositing four inspection images 32 obtained by imaging the object O four times while rotating the object O 90 degrees each time.

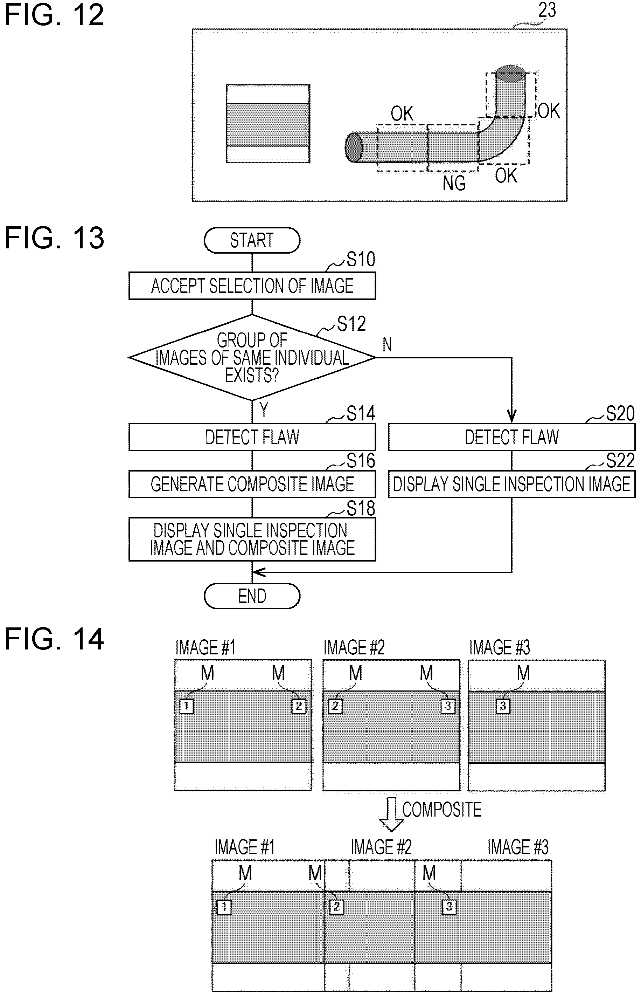

As illustrated in Fig. 12, when carrying out control to display the composite image, the display control unit 48 may also carry out control to display, in a distinguishable manner, the result of the flaw detection process performed on each image in the group of images of the same individual that make up the composite image. Fig. 12 illustrates an example in which the display control unit 48 displays "OK" and "NG" as the result of the flaw detection process, these being an example of information representing whether a defect is present or not. A flaw is determined to be a defect or not according to whether or not the size of the flaw is equal to or greater than a threshold value, for example.

The display control unit 48 may also carry out control to display at least one of the number of flaws, the density of flaws, or the severity of a flaw as the result of the flaw detection process. The density of flaws is determined by, for example, the ratio of the area of flaws to the area of the portion shown in an inspection image 32. The severity of a flaw is such that the larger the size of the flaw, the higher the severity value, for example. In this case, the display control unit 48 may also carry out control to display, in a distinguishable manner, the magnitudes of the values of the number of flaws, the density of flaws, and the severity of a flaw, such as by increasing the density of the color of the image border or the letters "NG" for correspondingly higher values of the number of flaws, the density of flaws, and the severity of a flaw.

Next, the action of the display control device 10 according to the present embodiment will be described with reference to Fig. 13. The display control process illustrated in Fig. 13 is executed by having the CPU 20 execute the display control program 30. The display control process illustrated in Fig. 13 is executed when the user selects a single inspection image 32, for example.

In step S10 of Fig. 13, the accepting unit 40 accepts the selection of a single inspection image 32 by the user. In step S12, as described above, the determination unit 42 determines, on the basis of the attribute information 34, whether or not a group of images of the same individual including the single inspection image 32 selected in step S10 exists in the storage device 22. If the determination is positive, the process proceeds to step S14.

In step S14, as described above, the detection unit 44 performs the flaw detection process on each image in the group of images of the same individual including the single inspection image 32 selected in step S10. In step S16, as described above, the compositing unit 46 generates a composite image by compositing the images in the group of images of the same individual.

In step S18, the display control unit 48 carries out control to display both the single inspection image 32 selected in step S10 and the composite image generated in step S16 on the display 23. When the process in step S18 ends, the display control process ends.

On the other hand, if the determination in step S12 is negative, the process proceeds to step S20. In step S20, as described above, the detection unit 44 performs the flaw detection process on the single inspection image 32 selected in step S10. In step S22, the display control unit 48 carries out control to display the single inspection image 32 selected in step S10 on the display 23. When the process in step S22 ends, the display control process ends.

As described above, according to the present embodiment, if the selection of a single inspection image 32 by the user is accepted and a group of images of the same individual including the single inspection image 32 exists in the storage device 22, a process for displaying a composite image is performed. Consequently, the user can check the images while also grasping information on the region surrounding the single inspection image 32, and as a result, a reduction in efficiency as the user checks the images can be mitigated.

Note that although the foregoing embodiment describes a case in which the user selects a single inspection image 32 from among a plurality of inspection images 32 stored in the storage device 22, the technology of the present disclosure is not limited to this form. For example, in another form, the user may select two or more inspection images 32 from among a plurality of inspection images 32 stored in the storage device 22. In this case, the display control process in the foregoing embodiment is performed on each selected inspection image 32.

Although the foregoing embodiment describes a case in which the composite image is a single image generated by compositing the images in a group of images of the same individual, the technology of the present disclosure is not limited to this form. For example, the composite image may also be a plurality of inspection images 32 in which the group of images of the same individual is arranged on the basis of the relative positional relationships of the portions of the same individual shown in each image in the group of images of the same individual. In this case, the images in the group of images of the same individual may also be obtained by imaging adjacent portions without overlapping partial regions.

The foregoing embodiment describes a case in which the compositing unit 46 generates a composite image by performing image processing to overlay shapes having the features of two inspection images 32 which were obtained by imaging adjacent portions and for which the similarity of extracted features is equal to or greater than a certain value, but the technology of the present disclosure is not limited to this form. For example, as illustrated in Fig. 14, if the inspection images 32 in a group of images of the same individual are images obtained by performing imaging with markers M shown, the compositing unit 46 may also generate a composite image by performing image processing to overlay the markers M in two inspection images 32 which were obtained by imaging adjacent portions. Fig. 14 illustrates an example in which the markers M are numerals representing the capture sequence. In this example form, the markers M are formed using a material that does not transmit the radiation R, such as lead for example.

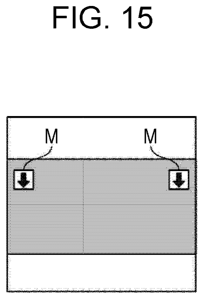

Note that the markers M are not limited to numerals and may also be letters. As illustrated in Fig. 15, the markers M may also be symbols, such as arrows indicating a range that is to remain in the composite image. Also, the markers M need not be for the express purpose of the compositing process. Non-destructive inspection standards (for example, JIS Z 2036:2015) stipulate that imaging is to be performed with a penetrameter (IQI: Image Quality Indicator) shown in the image. The shape of the penetrameter is also stipulated by the standards. Accordingly, the compositing unit 46 may also use penetrameters as the markers M.

In the foregoing embodiment, the compositing unit 46 may establish links for individually accessing each image in the group of images of the same individual that make up the composite image. In this case, if the user designates a specific image that forms part of the composite image displayed on the display 23, the display control unit 48 carries out control to display the designated image on the display 23.

In the foregoing embodiment, if the process for generating a composite image by compositing a group of images of the same individual fails, the display control unit 48 may also carry out control to display, on the display 23, information indicating that the process for generating a composite image has failed. In this case, the accepting unit 40 may also accept user-designated corrections to the composite image or a user-designated instruction to retry compositing. The user-designated corrections in this case may be, for example, corrections of the positions of the images that make up the composite image. If the user gives the instruction to retry compositing, some of the images may be rotated or rescaled, images may be added to the compositing, or some of the images in the composite image may be removed from the compositing.

In the foregoing embodiment, the CPU 20 may also perform at least one of gradation correction processing, distortion correction processing, or enlargement/reduction processing on at least one of the images that make up the composite image. For example, if the images that make up the composite image are of different scales, the CPU 20 performs enlargement/reduction processing to make the scales consistent with each other.

Also, in the foregoing embodiment, any of the various types of processors indicated below can be used as the hardware structure of a processing unit that executes various processes, such as those of each functional unit of the display control device 10, for example. The various types of processors may include a CPU as described above, which is a general-purpose processor that executes software (a program or programs) to function as any of various types of processing units, but may also include a programmable logic device (PLD) whose circuit configuration is modifiable after fabrication, such as a field-programmable gate array (FPGA), or a dedicated electric circuit, which is a processor having a circuit configuration designed for the express purpose of executing a specific process, such as an application-specific integrated circuit (ASIC).

A single processing unit may be configured as any one of these various types of processors, and may also be configured as a combination of two or more processors of the same or different types (for example, a combination of multiple FPGAs, or a combination of a CPU and an FPGA). Moreover, multiple processing units may also be configured as a single processor.

A first example of configuring multiple processing units as a single processor is a mode in which a single processor is configured as a combination of software and one or more CPUs, as typified by computers such as clients and servers, such that the processor functions as the plurality of processing units. A second example of the above is a mode utilizing a processor in which the functions of an entire system, including the plurality of processing units, are achieved on a single integrated circuit (IC) chip, as typified by a system on a chip (SoC). In this way, various types of processing units are configured as a hardware structure by using one or more of the various types of processors indicated above.

Furthermore, circuitry combining circuit elements such as semiconductor elements can be used as the hardware structure of these various types of processors.

The foregoing embodiment describes a form in which the display control program 30 is stored (installed) in advance in the storage device 22, but is not limited thereto. The display control program 30 may also be provided in the form of being recorded on a recording medium such as a Compact Disc - Read-Only Memory (CD-ROM), a Digital Versatile Disc - Read-Only Memory (DVD-ROM), or Universal Serial Bus (USB) memory. The display control program 30 may also be provided in the form of being downloaded from an external device over a network.

The disclosure in JP2023-030565 filed February 28, 2023 is incorporated herein by reference in entirety. All documents, patent applications, and technical standards mentioned in this specification are incorporated by reference herein to the same extent that individual documents, patent applications, and technical standards are specifically and individually noted as being incorporated by reference.

## Claims

1. A display control device comprising at least one processor configured to:
accept selection of at least one image from among a plurality of images stored in a storage device, and
if a group of images of the same individual including the selected at least one image exists in the storage device, the group of images of the same individual having been obtained by imaging a plurality of at least partially non-overlapping portions of the same individual, carry out control to display a composite image based on the group of images of the same individual.

2. The display control device according to claim 1, wherein the processor is configured to:
carry out control to display both the selected at least one image and the composite image.

3. The display control device according to claim 1 or claim 2, wherein
the composite image is an image in which the group of images of the same individual is arranged on a basis of relative positional relationships of portions of the same individual shown in each image in the group of images of the same individual.

4. The display control device according to claim 1 or claim 2, wherein
the same individual is an object of non-destructive inspection, and
the processor is configured to:
acquire a result of a flaw detection process performed on each image in the group of images of the same individual, and
when carrying out control to display the composite image, carry out control to display, in a distinguishable manner, the result of the flaw detection process performed on each image in the group of images of the same individual that make up the composite image.

5. The display control device according to claim 4, wherein the processor is configured to:
carry out control to display, in a distinguishable manner, information representing whether a defect is present or not and at least one of a number of flaws, a density of flaws, or a severity of a flaw as the result of the flaw detection process.

6. The display control device according to claim 1 or claim 2, wherein
the group of images of the same individual includes images obtained by imaging adjacent portions with overlapping partial regions, and
the processor is configured to:
extract features of the shapes of the portions from each image in the group of images of the same individual, and
generate the composite image by performing image processing to overlay shapes having the features of two images which were obtained by imaging adjacent portions and for which a similarity of the features is equal to or greater than a certain value.

7. The display control device according to claim 1 or claim 2, wherein
the same individual is an object of non-destructive inspection,
the group of images of the same individual includes images obtained by imaging adjacent portions with overlapping partial regions, and
the processor is configured to:
acquire a result of a flaw detection process performed on each image in the group of images of the same individual, and
generate the composite image by performing image processing to overlay flaws in two images which were obtained by imaging adjacent portions and which show the same flaw.

8. The display control device according to claim 4, wherein the processor is configured to:
perform a flaw detection process on each image in the group of images of the same individual.

9. The display control device according to claim 1 or claim 2, wherein
each image in the group of images of the same individual is an image obtained by imaging in a state with a marker shown, and
the processor is configured to:
generate the composite image by performing image processing to overlay the markers in two images obtained by imaging adjacent portions.

10. The display control device according to claim 1 or claim 2, wherein
links are established for individually accessing each image in the group of images of the same individual that make up the composite image.

11. The display control device according to claim 1 or claim 2, wherein
attribute information is assigned to each image in the group of images of the same individual, and
the processor is configured to:
determine, on a basis of the attribute information, whether or not the group of images of the same individual including the selected at least one image exists in the storage device.

12. The display control device according to claim 1 or claim 2, wherein
the processor is configured to:
if the process for generating the composite image by compositing the group of images of the same individual fails, carry out control to display information indicating that the process for generating the composite image has failed, and
accept user-designated corrections to the composite image or a user-designated instruction to retry compositing.

13. The display control device according to claim 1 or claim 2, wherein the processor is configured to:
perform at least one of gradation correction processing, distortion correction processing, or enlargement/reduction processing on at least one of the images that make up the composite image.

14. A display control method whereby a processor provided in a display control device executes a process to:
accept selection of at least one image from among a plurality of images stored in a storage device, and
if a group of images of the same individual including the selected at least one image exists in the storage device, the group of images of the same individual having been obtained by imaging a plurality of at least partially non-overlapping portions of the same individual, carry out control to display a composite image based on the group of images of the same individual.

15. A display control program causing a processor provided in a display control device to execute a process to:
accept selection of at least one image from among a plurality of images stored in a storage device, and
if a group of images of the same individual including the selected at least one image exists in the storage device, the group of images of the same individual having been obtained by imaging a plurality of at least partially non-overlapping portions of the same individual, carry out control to display a composite image based on the group of images of the same individual.
